# EUROPEAN PATENT SPECIFICATION

(11) **EP 2 067 949 B1**
(45) Date of publication and mention of the grant of the patent: **25.09.2013**
(21) Application number: 08167733.8
(22) Date of filing: 28.10.2008
(51) Int. Cl.: F01N 3/20

(54) **Nozzle system for injector**
Düsensystem für Injektor
Système de buse pour injecteur

(30) Priority: 04.12.2007 KR 20070125198
(43) Date of publication of application: 10.06.2009
(73) Proprietor: Hyundai Motor Company, Seoul (KR)
(72) Inventor: Lee, Myung Jun, Gyeonggi-do Yongin-city (KR); Kim, Chang Il, Ansan-city Gyeonggi-do (KR); Lee, Choong-Won, Daegu (KR)
(74) Representative: Viering, Jentschura & Partner

(56) References cited:
- DE-A1- 19 740 026
- GB-A- 2 170 269
- US-A1- 2006 196 172

## Description

### BACKGROUND OF THE INVENTION

### Field of the Invention

The present invention relates to a nozzle system of an injector, and in various aspects, to a nozzle system of an injector for a vehicle in which a structure thereof is improved and atomization performance of liquid that is injected is enhanced.

### Description of Related Art

Generally, vehicles are classified as gasoline vehicles, diesel vehicles, and LPG vehicles according to types of fuel. The diesel vehicles among them have high power for high load as well as lower fuel consumption and thus have increasing demand.

However, more polluting materials such as nitrogen oxide and particulate material are included in the exhaust gas of diesel vehicles compared to the gasoline vehicles. Accordingly, a variety of exhaust gas filter apparatuses are under development so as to purify the diesel exhaust gas by processing the polluting materials.

One conventional solution is a selective catalyst reduction (SCR) apparatus which uses a catalyst so as to reduce nitrogen oxide that is included in the exhaust gas to nitrogen and oxygen. The application range for such a system is becoming broader. Research into a urea-SCR apparatus utilizing urea as a reduction agent has been actively conducted. The basic principle of such urea-SCR apparatus is to transform the nitrogen compound NOₓ, which is harmful to the human body, to harmless nitrogen N₂ by a chemical reaction of ammonia and a catalyst.

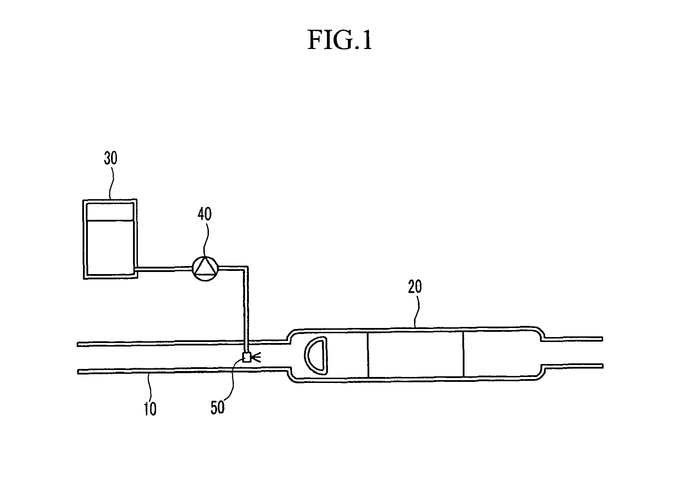

FIG. 1 is a schematic diagram of a conventional urea-SCR apparatus. Exhaust gas is exhausted from an exhaust manifold of an engine through an exhaust pipe 10. As shown in FIG. 1, the SCR apparatus 20 is disposed in the exhaust pipe 10 in the flow of exhaust gas.

An injector 50 is disposed inside the exhaust pipe 10, wherein the injector 50 injects urea upstream of the SCR apparatus 20 according to flow of the exhaust gas. The urea is injected into the exhaust pipe 10 through the injector 50 in the form of aquatic solution. The injector 50 receives the urea from a urea tank 30, where the urea is stored, through a urea supply pump 40. The injector injects the urea into the exhaust pipe 10.

The injected urea is transformed to ammonia in the exhaust pipe 10 in which the urea is vaporized and decomposed by thermal energy of the exhaust gas. Further, nitrogen oxide that reacts with the ammonia is transformed to harmless nitrogen.

Accordingly, the operation to purify the nitrogen oxide is substantially performed not by the urea but by the ammonia. Accordingly, it is beneficial that the injected urea solution have excellent vaporization and thermal decomposition performance.

The vaporization and thermal decomposition performance of the urea can be improved as the particle size of the injected urea becomes smaller. Accordingly, there is a desire to improve the performance of the SCR apparatus by increasing the atomization performance of the urea.

One such solution focuses on the injector nozzle. The nozzle shape of the injector 50 can be variously changed so as to efficiently atomize the urea that is injected into the exhaust pipe 10. However, it is generally difficult to atomize the urea that is injected in a solution state.

DE 197 40 026 A1 discloses a nozzle system for an injector comprising: a casing including an inlet through which liquid flows and an injector outlet through which liquid is outwardly ejected; a swirler disposed inside the casing, the swirler including at least one swirl groove formed in the exterior circumference thereof through which the liquid passes and a swirl chamber formed between an end portion of the casing and the injector outlet; and a needle.

GB 2 170 269 A discloses a nozzle system for an injector comprising: a casing including an inlet through which liquid flows and an injector outlet through which liquid is outwardly ejected; a swirler disposed inside the casing, the swirler including at least one swirl groove formed in the exterior circumference thereof through which the liquid passes and a swirl chamber formed between an end portion of the casing and the injector outlet; a needle for controlling liquid injection in the swirler whereby swirl torque is generated when the liquid flows into the swirl chamber through the swirl groove and swirls in the swirl chamber; and a needle hole extending in a length direction, wherein the needle is inserted into the needle hole and configured to move up and down therein, further wherein as the needle moves up and down in a length direction, an inflow of liquid into the swirl chamber is cut off or released.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY OF THE INVENTION

The present invention has been made in part in an effort to provide a nozzle system for an injector having advantages of improving atomization performance.

According to the present invention, a nozzle system as claimed in claim 1 is provided. The dependent claims define some examples of such a system.

A nozzle system for an injector may include a casing including an inlet through which liquid flows and an injector outlet through which liquid is outwardly ejected, a swirler disposed inside the casing, the swirler including at least one swirl groove formed in the exterior circumference thereof through which the liquid passes and a swirl chamber formed between an end portion of the casing and the injector outlet, and a needle for controlling liquid injection in the swirler whereby swirl torque is generated when the liquid flows into the swirl chamber through the swirl groove and swirls in the swirl chamber.

In various embodiments, the nozzle system further includes a nozzle block that is disposed inside the casing between the swirler and the injector outlet and faces the swirler, the nozzle block forming the swirl chamber, the nozzle block including a nozzle hole that leads from the swirl chamber to the injector outlet.

A recess portion having a recessed shape may be formed in one side of the nozzle block and the nozzle hole is formed substantially in the middle of the nozzle block.

A slanted portion having a narrowing cross-section in a direction towards the end portion may be formed at an exterior circumference of the swirler. The swirl groove may be formed at an exterior circumference of the slanted portion.

The slanted portion of the swirler may be formed as frustoconical shape. The recess portion may have a conical shape.

A route of the swirl groove that is projected along a plane to which an end surface of the slanted portion is extended may be formed in a tangential direction of the circumference the cut end surface of the slanted portion.

In various embodiments, the strength of the swirl torque and a shape of a film of the injected liquid are changed according to at least one of width, cross-sectional area, liquid route, and a combination thereof of the swirl groove. In various embodiments, the strength of the swirl torque and the shape of the liquid film that is injected are changed according to a slope angle of the slanted portion.

The swirler may include a needle hole extending in a length direction, wherein the needle is inserted into the needle hole and configured to move up and down therein. The swirler and needle may be configured such that as the needle moves up and down in a length direction, an inflow of liquid into the swirl chamber may be cut off or released.

The swirler may include at least the two swirl grooves in parallel with each other. A route of liquid route in the swirl groove, which is in communication with the swirl chamber, may extend to an outside portion of the center portion of the swirl chamber.

In the present invention, the atomization performance of a solution that is injected through the nozzle may be improved.

The methods and apparatuses of the present invention have other features and advantages which will be apparent from or are set forth in more detail in the accompanying drawings, which are incorporated herein, and the following Detailed Description of the Invention, which together serve to explain certain principles of the present invention.

### BRIEF DESCRIPTION OF THE DRAWINGS

FIG. 1 is a schematic diagram of a conventional urea-SCR apparatus.

FIG. 2 is a cross-sectional view of a nozzle system of an injector in accordance with the present invention.

FIG. 3 is a perspective view of a swirler in accordance with the present invention.

FIG. 4 is a front view of the swirler shown in FIG. 3.

### DETAILED DESCRIPTION OF THE INVENTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

A nozzle system of an injector according to various embodiments of the present invention can be applied to a nozzle system that is disposed in an injector so as to inject a liquid urea solution in a film shape. One skilled in the art, however, will appreciate that the nozzle system and injector of the present invention may be used in a variety of other applications and industries.

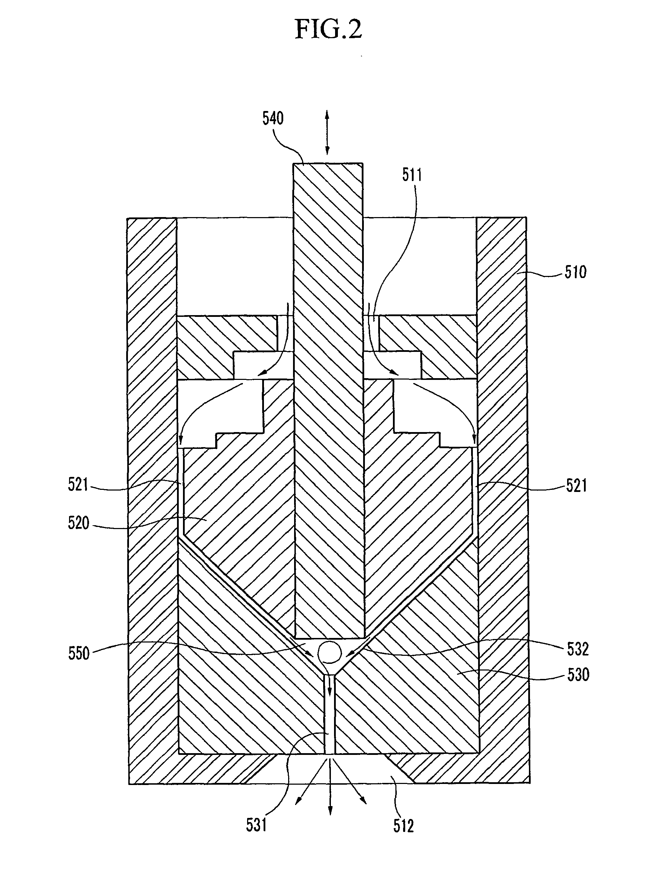

As shown in FIG. 2, the nozzle system according to various embodiments of the present invention includes a casing 510 through which liquid flows from a liquid supply apparatus (not shown). A swirler 520 disposed inside the casing 510 is configured for liquid to pass therethrough. A nozzle block 530 through which the liquid is injected after passing the swirler 520 is configured to generate a swirl of the liquid. By "swirl" it is meant a turbulent, circular, or swirling motion of the liquid. A needle 540 is provided to control the injection of the liquid in the system.

An inlet 511 through which the liquid flows is formed in an upper side of the casing 510, and an injector outlet 512 through which the liquid is outwardly ejected is formed in a lower side of the casing 510.

The liquid flows into the casing 510 through the inlet 511 and passes the swirler 520 and a slanted portion 523. In various embodiments, a cross-section of the slanted portion becomes smaller in a liquid injection direction toward its end portion. The slanted portion may be formed in the swirler 520. A portion of the exterior circumference of the swirler 520, except the slanted portion 523, comes into contact with a portion of the interior circumference of the casing 510. A swirl groove 521, through which the liquid can pass, is formed in the exterior circumference. In this instance, the liquid progresses in a downward direction through the swirl groove 521.

A nozzle block 530 may be positioned or equipped inside the casing 510. The nozzle block is positioned to coincide with a lower part of the swirler 520. Further, a recess portion 532 that has a concave shape is formed in an upper part of the nozzle block 530 to correspond to the shape of the slanted portion 523 of the swirler 520, and the slanted portion 523 of the exterior circumference of the swirler 520 comes in contact with the recess portion 532.

A nozzle hole 531 is formed through the center of the nozzle block 530, and the nozzle hole 531 communicates with the injector outlet 512 of the casing 510. Accordingly, the liquid is injected through the swirl groove 521, the nozzle hole 531, and the injector outlet 512.

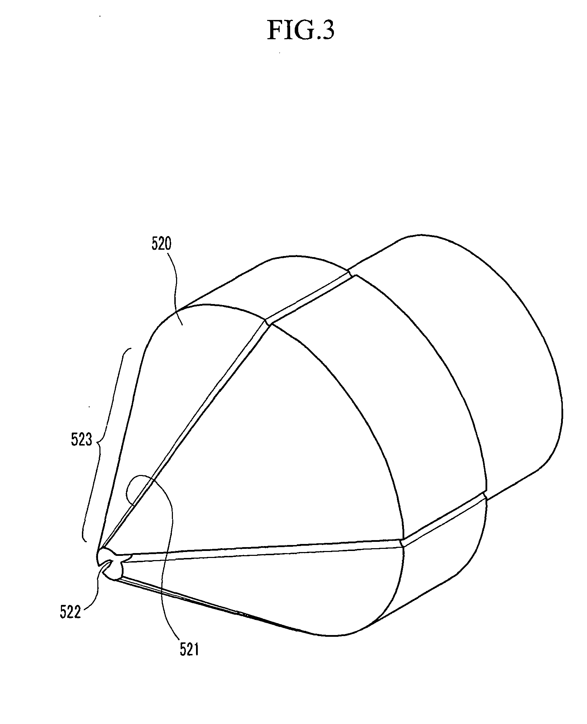

Referring to FIG. 2 and FIG. 3, the slanted portion 523 of the swirler 520 and the recess portion 532 of the nozzle block 530 may contact each other in whole or in part.

A swirl chamber 550 is formed by a gap between the recess portion 532 and the end portion of the slanted portion 523. In various embodiments, the gap is formed in the central portion of the recess portion and slanted portion. Further, the swirl chamber 550 communicates with the nozzle hole 531 of the nozzle block 530.

A route of the liquid in the swirl groove 521 is formed such that swirl torque is generated in the swirl chamber 550 when the liquid that passes through the swirl groove 521 flows into the swirl chamber 550.

Accordingly, when the liquid passes through the swirl groove 521, a swirl is formed in the swirl chamber 550 and a liquid film, which forms an air-core in the central portion of the swirl chamber 550, is formed by centrifugal force when the liquid flows to the nozzle hole 531. The swirl torque further relates to a rotational inertia of the swirling fluid.

The liquid film that is formed in the swirl chamber 550 rotates along the interior circumference of the nozzle hole 531 and is injected outwardly as a liquid film with a substantially conical shape through the injector outlet 512.

Accordingly, the nozzle system of an injector according to various embodiments of the present invention does not inject the liquid in a beam shape. Rather, the system injects the liquid in a thin conical film shape. Accordingly, after injection, the contact area of the thin liquid film with outside air is greater such that atomization thereof is promoted.

In addition, the slanted portion 523 of the swirler 520 may have a conical shape as shown in FIG. 3. That is, an upper section of the swirler 520 may have a substantially cylindrical exterior circumference so as to contact an interior circumference of the casing 510. The slanted portion 523 may have a substantially conical shape of which a centerline thereof is the same as that of the cylindrical section. One will appreciate from the foregoing that the slanted portion 523 may be in the form of a triangular pyramid, a quadrangular pyramid, a polygonal pyramid, and other shapes.

Further, as shown in FIG. 2 and FIG. 3, a part of the small end of the slanted portion 523 may be cut off such that both end surfaces of the swirler 520 are in a parallel with each other. In various embodiments, the swirler has a frustoconical shape. The swirl chamber 550 can be formed at a central region of the recess portion 532 of the nozzle block 530 if the small end of the slanted portion 523 is partially cut off.

The shape of the recess portion 532 may be in the form of a cone corresponding to the slanted portion 523 of the swirler 520. The swirl chamber 550 may also in the form of a cone.

The swirl torque of the liquid can be further increased in the swirl chamber 550 by utilizing a conical shape.

Further, as shown in FIG. 2 and FIG. 3, the swirl groove 521 can be formed to have a straight liquid route that is perpendicular to the circumferential direction of the slanted portion 523. In various embodiments, the groove 521 may follow a curved line route.

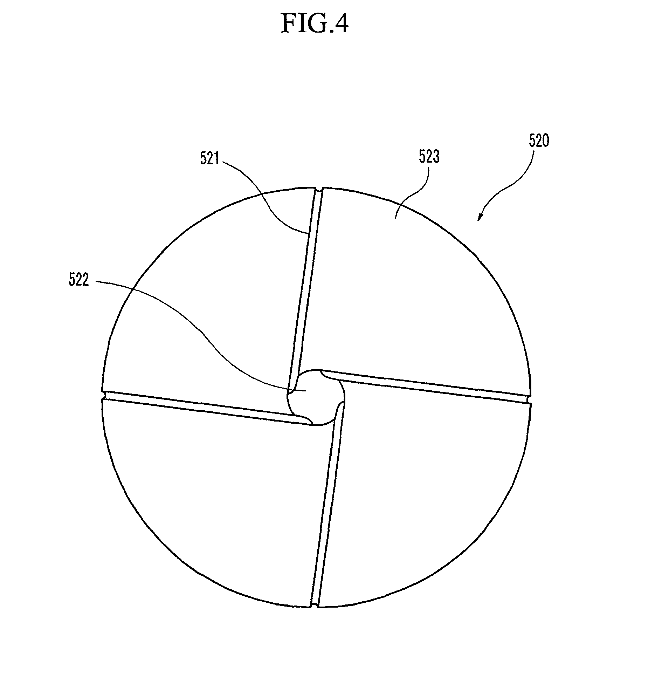

As shown in FIG. 4, the straight swirl groove 521 is formed to be tangential to a circumference of the cut end surface of the slanted portion 523. That is, when the small end of the slanted portion 523 is cut in parallel to the large end thereof, the cut end surface forms a circle. The route of the swirl groove 521 may be formed in a direction that is tangential to the circle. In other words, when the swirl groove 521 is projected along an imaginary plane in which the cut end surface of the slanted portion 523 is extended, as shown in FIG. 4, the route of the swirl groove 521 is formed in a tangential line direction and communicates with the circumference of the cut end surface of the slanted portion 523.

The liquid that passes through the swirl groove 521 moves in the tangential line direction of the end surface of the slanted portion 523 according to the route. When it flows into the swirl chamber 550, torque is generated by the tangential line direction speed and thereby the swirl is formed in the swirl chamber 550.

Depending on the application, a plurality of the swirl grooves 521 can be formed. In various embodiments, three or four are formed.

When a plurality of the swirl grooves 521 are formed, the swirl grooves 521 may be symmetrically formed in a circumference direction of the swirler 520 at uniform intervals.

Further, the torque of the swirl can be adjusted by the shape, the cross-section size, and the route of the swirl groove 521, as well as the slope angle of the slanted portion 523. Accordingly, the form and the injection angle of the liquid film that is injected through the nozzle hole 531 and injector outlet 512 can be adjusted. The nozzle system controls the injection of the liquid by the needle 540 in the above description.

The needle 540 may also be disposed in the inlet 511 of the casing 510 or the inlet side of the swirl groove 521 for adjustment. As shown in FIG. 2, the needle 540 penetrates the swirler 520. Also, the needle 540 can be configured to reciprocate up and down to prevent or release inflow of the liquid into the swirl chamber 550 from the swirl groove 521.

A needle hole 522 that penetrates the swirler 520 in a length direction may be formed in the center portion of the swirler 520 to receive the needle. The needle 540 is inserted into the needle hole 522 and moves up and down in a length direction.

As shown in FIG. 2, as the needle 540 moves down inside the needle hole 522, the needle 540 comes in contact with at least a portion of the interior circumference of the swirl chamber 550, that is, the interior circumference of the recess portion 532. Accordingly, the needle 540 prevents the flow of the liquid into the nozzle hole 531. Further, as the needle 540 moves up, the liquid is supplied into the nozzle hole 531.

The diameter of the needle hole 522, as shown in FIG. 2 to FIG. 4, may be the same as that of the cut end surface of the slanted portion 523 of the swirler 520. Accordingly, the distance that the needle 540 moves up and down is short such that prompt control thereof is possible. The upward and downward movement of the needle 540 can be performed by a separate solenoid (not shown).

For convenience in explanation and accurate definition in the appended claims, the terms "upper" or "lower", "front" or "rear", "inside" or "outside", and etc. are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. A nozzle system for an injector comprising:
a casing (510) including an inlet (511) through which liquid flows and an injector outlet (512) through which liquid is outwardly ejected;
a swirler (520) disposed inside the casing (510), the swirler (520) including at least one swirl groove (521) formed in the exterior circumference thereof through which the liquid passes and a swirl chamber (550) formed between an end portion of the casing (510) and the injector outlet (512); and
a needle (540) for controlling liquid injection in the swirler (520) whereby swirl torque is generated when the liquid flows into the swirl chamber (550) through the swirl groove (521) and swirls in the swirl chamber (550),
wherein
the swirler (520) includes a needle hole (522) extending in a length direction, wherein the needle (540) is inserted into the needle hole (522) and configured to move up and down therein, further wherein as the needle (540) moves up and down in a length direction, an inflow of liquid into the swirl chamber (550) is cut off or released,
wherein the nozzle system includes a nozzle hole (531) that leads from the swirl chamber (550) to the injector outlet (512), wherein the swirl chamber (550) has the form of a cone,
**characterized in that**
the swirl chamber (550) is formed between an end portion of the needle (540) and the injector outlet (512) when said inflow of liquid into the swirl chamber (550) is cut off by said needle (540).

2. The nozzle system for an injector of claim 1, further comprising a nozzle block (530) that is disposed inside the casing (510) between the swirler (520) and the injector outlet (512) and faces the swirler (520), the nozzle block forming the swirl chamber (550), the nozzle block (530) including a nozzle hole (531) that leads from the swirl chamber (550) to the injector outlet (512).

3. The nozzle system for an injector of claim 2, wherein a recess portion (532) having a recessed shape is formed in one side of the nozzle block (530) and the nozzle hole (531) is formed substantially in the middle of the nozzle block (530).

4. The nozzle system for an injector of claim 1, wherein a slanted portion (523) having a narrowing cross-section in a direction towards the end portion is formed at an exterior circumference of the swirler (520), further wherein the swirl groove (521) is formed at an exterior circumference of the slanted portion (523).

5. The nozzle system for an injector of claim 4, wherein the slanted portion (523) of the swirler (520) is formed as frustoconical shape.

6. The nozzle system for an injector of claim 3, wherein the recess portion (532) has a conical shape.

7. The nozzle system for an injector of claim 5, wherein a route of the liquid in the swirl groove (521) projected along a plane to which the cut end surface of the slanted portion (523) is extended is formed in a tangential direction of the circumference the cut end surface of the slanted portion (523).

8. The nozzle system for an injector of claim 4, wherein the strength of the swirl torque and a shape of a film of the injected liquid are changed according to at least one of width, cross-sectional area, liquid route, and a combination thereof of the swirl groove (521).

9. The nozzle system for an injector of claim 7, the swirler (520) including at least the two swirl grooves (521) in parallel with each other.

10. The nozzle system for an injector of claim 7, wherein a liquid route of the swirl groove (521) in communication with the swirl chamber (550) extends to an outside portion of the center portion of the swirl chamber (550).

11. The nozzle system for an injector of claim 4, wherein the strength of the swirl torque and the shape of the liquid film that is injected are changed according to a slope angle of the slanted portion (523).

## Patentansprüche

1. Ein Düsensystem für einen Injektor, aufweisend:
ein Gehäuse (510), das einen Einlass (511), durch den Flüssigkeit strömt, und einen Injektorauslass (512), durch den Flüssigkeit nach außen ausgestoßen wird, aufweist
einen Verwirbler (520), der innerhalb des Gehäuses (510) angeordnet ist, wobei der Verwirbler (520) aufweist mindestens eine in dem Außenumfang davon ausgebildete Wirbelnut (521), durch die die Flüssigkeit hindurchströmt, und eine Wirbelkammer (550), die zwischen einem Endabschnitt des Gehäuses (510) und dem Injektorauslass (512) ausgebildet ist, und
eine Nadel (540) zum Steuern der Flüssigkeitseinspritzung in den Verwirbler (520), wobei ein Wirbeldrehmoment erzeugt wird, wenn die Flüssigkeit durch die Wirbelnut (521) hindurch in die Wirbelkammer (550) strömt und in der Wirbelkammer (550) wirbelt,
wobei
der Verwirbler (520) ein Nadelloch (522) aufweist, das sich in einer Längsrichtung erstreckt, wobei die Nadel (540) in das Nadelloch (522) eingesetzt ist und eingerichtet ist, um sich darin nach oben und nach unten zu bewegen, wobei ferner, während sich die Nadel (540) in einer Längsrichtung nach oben und nach unten bewegt, ein Flüssigkeitszustrom in die Wirbelkammer (550) abgeschnitten oder losgelassen wird,
wobei das Düsensystem ein Düsenloch (531) aufweist, das von der Wirbelkammer (550) zu dem Injektorauslass (512) führt, wobei die Wirbelkammer (550) die Form eines Konus hat,
**dadurch gekennzeichnet, dass**
die Wirbelkammer (550) zwischen einem Endabschnitt der Nadel (540) und dem Injektorauslass (512) ausgebildet ist, wenn der Flüssigkeitszustrom in die Wirbelkammer (550) durch die Nadel (540) abgeschnitten wird.

2. Das Düsensystem für einen Injektor gemäß Anspruch 1, ferner einen Düsenblock (530) aufweisend, der innerhalb des Gehäuses (510) zwischen dem Verwirbler (520) und dem Injektorauslass (512) angeordnet ist und dem Verwirbler (520) zugewandt ist, wobei der Düsenblock die Wirbelkammer
(550) bildet, wobei der Wirbelblock (530) ein Düsenloch
(531) aufweist, das von der wirbelkammer (550) zu dem Injektorauslass (512) führt.

3. Das Düsensystem für einen Injektor gemäß Anspruch 2, wobei ein Aussparungsabschnitt (532), der eine ausgesparte Form hat, in einer Seite des Düsenblocks (530) ausgebildet ist und das Düsenloch (531) im Wesentlichen in der Mitte des Düsenblocks (530) ausgebildet ist.

4. Das Düsensystem für einen Injektor gemäß Anspruch 1, wobei ein Neigungsabschnitt (523), der in einer Richtung zu dem Endabschnitt hin einen sich verjüngenden Querschnitt hat, an einem Außenumfang des Verwirbelers (520) ausgebildet ist, wobei ferner die Wirbelnut (521) an einem Außenumfang des Neigungsabschnitts (523) ausgebildet ist.

5. Das Düsensystem für einen Injektor gemäß Anspruch 4, wobei der Neigungsabschnitt (523) des Verwirbelers (520) als kegelstumpfartige Form ausgebildet ist.

6. Das Düsensystem für einen Injektor gemäß Anspruch 3, wobei der Aussparungsabschnitt (532) eine konische Form hat.

7. Das Düsensystem für einen Injektor gemäß Anspruch 5, wobei ein Weg der Flüssigkeit in der Wirbelnut (521), projiziert entlang einer Ebene, zu der die Schnittendfläche des Neigungsabschnitts (523) erstreckt ist, in einer tangentialen Richtung des Umfangs der Schnittendfläche des Neigungsabschnitts (523) gebildet ist.

8. Das Düsensystem für einen Injektor gemäß Anspruch 4, wobei die Stärke des Wirbeldrehmoments und eine Form eines Films der eingespritzten Flüssigkeit gemäß mindestens einem von der Breite, der Querschnittsfläche, dem Flüssigkeitsweg und einer Kombination davon der Wirbelnut (521) geändert werden können.

9. Das Düsensystem für einen Injektor gemäß Anspruch 7, wobei der Verwirbeler (520) mindestens die beiden Wirbelnuten (521) parallel zueinander aufweist.

10. Das Düsensystem für einen Injektor gemäß Anspruch 7, wobei sich ein Flüssigkeitsweg der Wirbelnut (521) in Verbindung mit der Wirbelkammer (550) zu einem Außenabschnitt des Zentralabschnitts der Wirbelkammer (550) erstreckt.

11. Das Düsensystem für einen Injektor gemäß Anspruch 4, wobei die Stärke des wirbeldrehmoments und die Form des Flüssigkeitsfilms, der eingespritzt wird, gemäß einem Neigungswinkel des Neigungsabschnitts (523) geändert werden können.

## Revendications

1. Système de gicleur destiné à un injecteur comprenant :
une enveloppe (510) incluant une entrée (511) à travers laquelle circule un liquide et une sortie d'injecteur (512) à travers laquelle le liquide est éjecté vers l'extérieur ;
un dispositif de turbulence (520) disposé à l'intérieur de l'enveloppe (510), le dispositif d'agitation à tourbillons (520) incluant au moins une rainure de turbulence (521) formée dans la circonférence extérieure de celui-ci à travers laquelle passe le liquide et une chambre de turbulence (550) formée entre une partie d'extrémité de l'enveloppe (510) et la sortie d'injecteur (512) ; et
un pointeau (540) destiné à commander l'injection de liquide dans le dispositif de turbulence (520) moyennant quoi un couple de turbulence est généré lorsque le liquide circule à l'intérieur de la chambre de turbulence (550) à travers la rainure de turbulence (521) et tourbillonne dans la chambre de turbulence (550) ;
dans lequel
le dispositif de turbulence (520) inclut un trou de pointeau (522) s'étendant dans le sens de la longueur, dans lequel le pointeau (540) est inséré dans le trou de pointeau (522) et confguré pour se déplacer à l'intérieur vers le haut et vers le bas, dans lequel en outre, lorsque le pointeau (540) se déplace vers le haut et vers le bas dans le sens de la longueur, une arrivée de liquide à l'intérieur de la chambre de turbulence (550) est arrêtée ou libérée ;
dans lequel le système de gicleur inclut un trou de gicleur (531) qui va de la chambre de turbulence (550) vers la sortie d'injecteur (512), dans lequel la chambre de turbulence (550) est en forme de cône ;
**caractérisé en ce que**
la chambre de turbulence (550) est formée entre une partie d'extrémité du pointeau (540) et la sortie d'injecteur (512) lorsque ladite arrivée de liquide à l'intérieur de la chambre de turbulence (550) est arrêtée par ledit pointeau (540).

2. Système de gicleur destiné à un injecteur selon la revendication 1, comprenant en outre un bloc gicleur (530) qui est disposé à l'intérieur de l'enveloppe (510) entre le dispositif de turbulence (520) et la sortie d'injecteur (512) et qui fait face au dispositif de turbulence (520), le bloc gicleur formant la chambre de turbulence (550), le bloc gicleur (530) incluant un trou de gicleur (531) qui va de la chambre de turbulence (550) vers la sortie d'injecteur (512).

3. Système de gicleur destiné à un injecteur selon la revendication 2, dans lequel une partie de renfoncement (532) présentant une forme renfoncée, est formée sur un côté du bloc gicleur (530) et le trou de gicleur (531) est formée, sensiblement, au milieu du bloc gicleur (530).

4. Système de gicleur destiné à un injecteur selon la revendication 1, dans lequel une partie inclinée (523) présentant une section transversale se rétrécissant dans un sens vers la partie d'extrémité, est formée au niveau d'une circonférence extérieure du dispositif de turbulence (520), dans lequel en outre la rainure de turbulence (521) est formée au niveau d'une circonférence extérieure de la partie inclinée (523).

5. Système de gicleur destiné à un injecteur selon la revendication 4, dans lequel la partie inclinée (523) du dispositif de turbulence (520) présente une forme tronconique.

6. Système de gicleur destiné à un injecteur selon la revendication 3, dans lequel la partie de renfoncement (532) présente une forme conique.

7. Système de gicleur destiné à un injecteur selon la revendication 5, dans lequel le chemin du liquide dans la rainure de turbulence (521) projeté le long d'un plan vers lequel la surface d'extrémité coupée de la partie inclinée (523) s'étend, est formé dans un sens tangentiel de la circonférence de la surface d'extrémité coupée de la partie inclinée (523).

8. Système de gicleur destiné à un injecteur selon la revendication 4, dans lequel la force du couple de tourbillons et la forme d'un film du liquide injecté, sont modifiées selon l'un au moins de la largeur, de la section transversale, du chemin du liquide, et d'une combinaison de ceux-ci de la rainure à tourbillons (521).

9. Système de gicleur destiné à un injecteur selon la revendication 7, dans lequel le dispositif de turbulence (520) incluant au moins les deux rainures de turbulence (521), qui sont parallèles entre elles.

10. Système de gicleur d'injecteur selon la revendication 7, dans lequel le chemin du liquide de la rainure de turbulence (521) en communicatiou avec la chambre de turbulence (550), s'étend vers une partie extérieure de la partie centrale de la chambre de turbulence (550).

11. Système de gicleur destiné à un injecteur selon la revendication 4, dans lequel la force du couple de turbulence et la forme du film de liquide qui est injecté, sont modifiées selon un angle de pente de la partie inclinée (523).
